# EUROPÄISCHE PATENTANMELDUNG

(11) **EP 0 756 968 A1**
(43) Veröffentlichungstag der Anmeldung: **05.02.1997**
(21) Anmeldenummer: 96112178.7
(22) Anmeldetag: 27.07.1996
(51) Int. Cl.: B60R 1/04, B60R 1/12

(54) **Kfz-Innenspiegel**

(30) Priorität: 01.08.1995 DE 29512399 U
(71) Anmelder: Hohe GmbH & Co, 97903 Collenberg (DE)
(72) Erfinder: Kaspar, Rudolf, 97903 Collenberg (DE); Werner, Harald, 97903 Collenberg (DE)
(74) Vertreter: Zinngrebe, Horst, Dr.rer.nat.

(57) **Zusammenfassung**

Beschreiben wird an einer durchsichtigen Scheibe befestigbarer Tragarm eines Spiegels, vorzugsweise eines Kfz-Innenspiegels, wobei der Tragarm ein elektrisches Kabel mit wenigstens einer Leiterseele umschließt und einen Fuß zur Verbindung mit der Scheibe aufweist, wobei ein mit der Leiterseele elektrisch verbundener Leiter soweit aus dem Fuß vorsteht, daß sein freies Ende eine auf der Scheibe aufgebrachte Leiterschichtbahn kontaktiert.

## Beschreibung

Die Erfindung betrifft einen an einer durchsichtigen Scheibe befestigbaren Tragarm eines Spiegels, vorzugsweise eines Kfz-Innenspiegels, wobei der Tragarm ein elektrisches Kabel mit wenigstens einer Leiterseele umschließt und einen Fuß zur Verbindung mit der Scheibe aufweist.

Aus DE-A-30 33 143 ist ein Kfz-Innenspiegel bekannt, dessen Tragarm mit einer an der Innenfläche einer Windschutzscheibe angeklebten Grundplatte verrastet werden kann. Aus DE-A-43 22 937 ist es bekannt, in dem auf das freie Ende des Tragarms aufgeklemmten Spiegelgehäuse elektronische Einrichtungen unterzubringen, die über ein mehradriges, elektrisches Kabel an das Bordnetz des Fahrzeugs angeschlossen sind. Das Stromversorgungskabel ist hierbei im Inneren des Tragarms verlegt und über eine Steckverbindung mit einem sich über einen Teil, der Windschutzscheibe erstreckenden Kabel verbunden.

Nachteilig ist hierbei, daß das auf der Windschutzscheibe verlegte Kabel sichtbar ist und einen unschönen Eindruck erweckt. Darüber hinaus stört das Kabel beim Reinigen der Innenfläche der Windschutzscheibe.

Der Erfindung liegt daher die Aufgabe zugrunde, eine den ästhetischen Eindruck sowie die Säuberung der Scheibe nicht störende Stromversorgung für elektrische Einrichtungen im Innenspiegel zu schaffen.

Dazu ist bei dem eingangs genannten Spiegel nach der Erfindung vorgesehen, daß ein mit der Leiterseele elektrisch verbundener Leiter soweit aus dem Fuß vorsteht, daß sein freies Ende eine auf der Scheibe aufgebrachte Leiterschicht kontaktiert. Die Leiterschicht auf der Windschutzscheibe stört das ästhetische Empfinden nicht, und kann abriebfest auf die Scheibe aufgebracht werden, so daß der Reinigung der Scheibe keine störenden Kabel im Wege stehen.

Bevorzugte Ausgestaltungen der Erfindung sind in den Unteransprüchen angegeben.

Die Erfindung wird nachstehend anhand des in der beigefügten Zeichnung dargestellten Ausführungsbeispiels im einzelnen beschrieben. Es zeigen:
- Fig. 1: eine schematische Seitenansicht eines mit den Merkmalen der Erfindung ausgestatteten Kfz-Innenspiegels;
- Fig. 2: eine schematische Draufsicht auf den Fuß des Tragarms für den Innenspiegel nach Fig. 1;
- Fig. 3: die Ansicht eines Schnittes längs der Linie A-A aus Fig. 2; und
- Fig. 4: eine schematische Ausschnittsdarstellung eines Teils der Windschutzscheibe mit aufgeklebter Grundplatte.

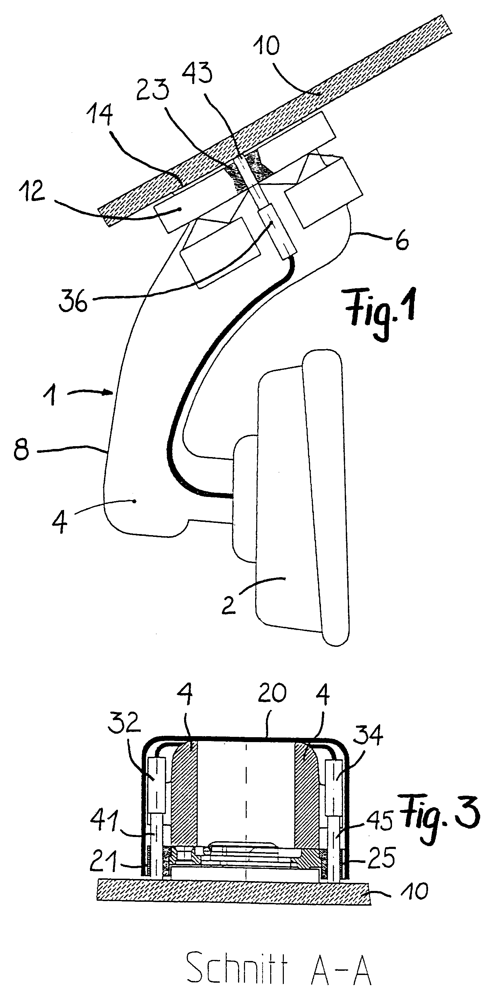

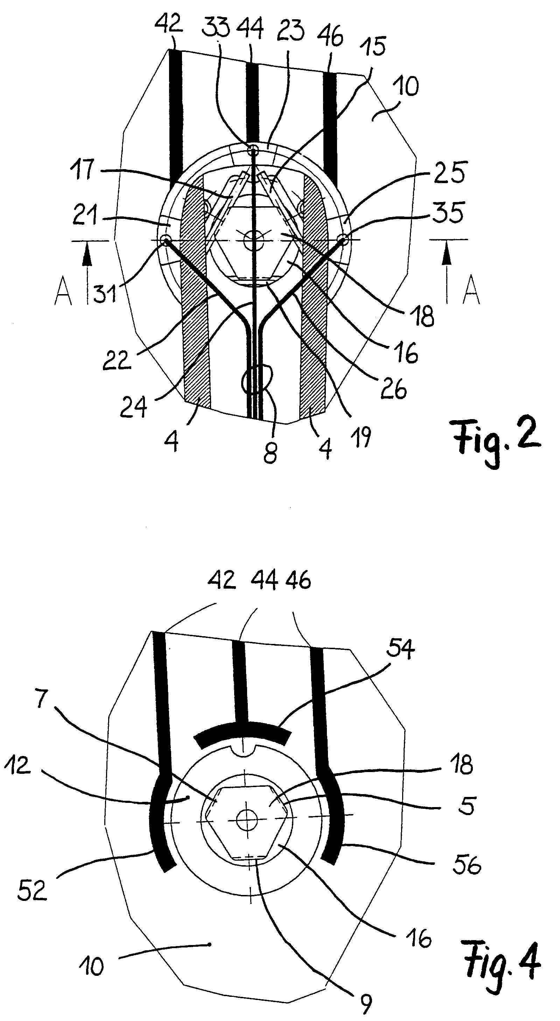

Der in Fig. 1 dargestellte und im Ganzen mit 1 bezeichnete Kraftfahrzeuginnenspiegel kann von der Art sein, wie sie im Zusammenhang mit Fig. 2 der DE-A-43 22 937 gezeigt und beschrieben ist. Danach ist das Spiegelgehäuse 2 auf das freie Ende eines Tragarms 4 aufgeklemmt, welcher mit einem Fuß 6 versehen ist. Im Inneren des Spiegelgehäuses 2 befinden sich elektronische Einrichtungen, die über das im Inneren des hohlen Tragarms 4 verlegte elektrische Kabel 8 mit Strom von der Fahrzeugbatterie versorgt wird. Der Fuß 6 ist allgemein in der Form ausgeführt, wie sie in DE-A-30 33 143 erläutert ist. Der Fuß 6 paßt zu einer Grundplatte 12, deren plane ebene Rückseite 14 an die Innenfläche der Windschutzscheibe 10 angeklebt ist. Die Grundplatte 12 besitzt auf der Vorderseite eine becherförmige, im wesentlichen runde Ausnehmung 16 (Fig. 3 und 4), welche im dargestellten Ausführungsbeispiel von drei in der Grundplatte an ihren Enden eingefangenen und in Umfangsrichtung um jeweils 120° beabstandeten Federstäben 15, 17, 19 teilweise überbrückt ist. Am freien Ende ist der Fuß 6 als eine im wesentlichen ebene polygonale Platte 18 ausgeführt. Die Platte 18 weist in Umfangsrichtung um jeweils 120° beabstandete Kanten 5, 7, 9 auf, von denen jede einen der Federstäbe 15, 17, 19 in dem die becherförmige Ausnehmung 16 überbrückenden Abschnitt unterfassen kann. Die Länge der Kanten 5, 7, 9 ist so gewählt, daß sie bei Drehung der Platte 18 gegenüber der in Fig. 2 dargestellten Stellung um 60° unter den Federstäben 15, 17, 19 freikommen und der Tragarm mithin kraftlos von der Grundplatte 12 abgenommen werden kann. Diese Art der Verrastung des Tragarms 4 an der Grundplatte 12 ist in dem Dokument DE-A-30 33 141 im einzelnen beschrieben, auf dessen Inhalt hier Bezug genommen wird.

Im dargestellten Ausführungsbeispiel ist das elektrische Kabel 8 dreiadrig mit den Adern 22, 24, 26, von denen jede eine im einzelnen nicht dargestellte Leiterseele aufweist.

An die Peripherie des Fußes 6 sind drei oder in einer der Adernzahl entsprechenden Anzahl in Umfangsrichtung zweckmäßig beabstandete Haltestücke 21, 23, 25 angeformt, von denen jedes aus einem isolierenden Kunststoffmaterial besteht, und mit einer Längsbohrung 31, 33, 35 versehen ist. In jeder der Längsbohrungen 31, 33, 35 steckt je ein hülsenförmiger Kontaktstift 41, 43, 45, von denen in Fig. 3 die Kontaktstifte 41 und 45 zu erkennen sind. Jede Leiterseele ist in einem Stecker 32, 34, 36 befestigt, der in ein Ende der Stifthülsen 41, 43, 45 eingesteckt ist. Das gegenüberliegende freie Ende der Stifthülsen 41, 43, 45 steht aus den zugehörigen Haltestücken und damit aus dem Fuß 6 um eine Strecke vor, auf die noch eingegangen wird.

Auf die Innenfläche der durchsichtigen Windschutzscheibe 10 sind drei, oder allgemein eine der Anzahl der Adern des Kabels 8 entsprechende Anzahl Leiterschichtbahnen 42, 44, 46 aus leitfähigem Material beispielsweise durch Aufdampfen aufgebracht, von denen jede vor der Peripherie der Grundplatte 12 endet. Jede Leiterschichtbahn 42, 44, 46 endet vor der Grundplatte 12 in einem Kreisbogen 52, 54, 56, wobei alle Kreisbahnen 52, 54, 56 ihren gemeinsamen Mittelpunkt im Mittelpunkt der Grundplatte 12 haben. Jeder der Bogen 52, 54, 56 hat von dem Mittelpunkt der Grundplatte 12 einen Abstand, der gleich dem Abstand einer der Leiterstifthülsen 41, 43, 45 vom Mittelpunkt der Grundplatte 12 ist, wenn der Tragarm 4 wie beschrieben an der Grundplatte 12 verrastet ist. Im dargestellten Ausführungsbeispiel erstreckt sich jeder Bogen 52, 54, 56 in Umfangsrichtung um etwa 60°, d.h. den halben Winkel, um den die Federstäbe 15, 17, 19 winkelmäßig beabstandet sind und um den der Tragarm 4 zur Verrastung oder Entrastung gedreht werden muß.

Da beabsichtigt ist, daß das freie Ende jeder der Stifthülsen 41, 43, 45 einen zugehörigen Kreisbogen 52, 54, 56 der Leiterschichtbahnen 42, 44, 46 elektrisch kontaktiert, wenn der Tragarm 4 mit der Grundplatte 12 verrastet ist, steht das freie Ende jedes der Kontaktstifte 41, 43, 45 um eine Strecke aus dem Fuß 6 vor, die diese Kontaktierung sicherstellt. Im Normalfall hält der mit der Grundplatte 12 verrastete Fuß 6 einen Abstand von etwa 1-2 mm von der Innenfläche der Windschutzscheibe 10. Daher kann das erwähnte freie Ende der Stifthülsen 41, 43, 45 um 1-2 mm über die Unterseite des Fußes in Richtung auf die Windschutzscheibe 10 vorstehen, um die Kontaktgabe mit den Leiterschichtbahnen 42, 44, 46 sicherzustellen.

Die sichere Kontaktgabe wird im übrigen auch dadurch bewirkt, daß die Federstäbe 15, 17, 19 die Platte 18 in die Grundplatte 12 und damit den Fuß 6 in Richtung auf die Windschutzscheibe 10 drängen. Damit werden gleichzeitig die Enden der Stifthülsen 41, 43, 45 gegen die Leiterschichtbahnen 42, 44, 46 bzw. deren abschließende Bögen 52, 54, 56 gedrängt.

Um die Kontaktgabe der Leiterstifthülsen 41, 43, 45 mit den Leiterschichtbahnen 42, 44, 46 zu verbessern, kann vorgesehen sein, daß innerhalb jeder der Leiterstifthülsen 41, 43, 45 eine federbelastete Kugel aus Metall oder dergleichen elektrisch leitfähigem Material eingebaut ist, deren Kalotte aus einer Bohrung am freien Ende der Kontakthülsen 41, 43, 45 weiter vorsteht als der erwähnte Abstand der Unterseite des Fußes 6 von der Windschutzscheibe 10 im verrasteten Zustand. Im übrigen ist der Fuß 6, der mit seinen Haltestücken 21, 23, 25 die Grundplatte 12 übergreift, von einer Schutzhaube 20 aus isolierendem Kunststoff überdeckt, die außerdem die Endabschnitte der Adern 22, 24, 26 mit zugehörigen Steckern 32, 34, 36 nach außen abdeckt.

Es versteht sich, daß die Leiterschichtbahnen 42, 44, 46 am nicht dargestellten Ende der Windschutzscheibe 10 über das Bordnetz, das Verstärker, Verteiler und dergleichen Elemente enthalten kann, mit der Batterie des Fahrzeugs elektrisch verbunden sind.

Die Erfindung ist ersichtlich nicht darauf beschränkt, daß der Fuß 6 mit der Grundplatte 12 in der aus dem Dokument DE-A-30 33 143 erläuterten Art verrastet werden kann. Es sind vielmehr Anwendungsfälle der Erfindung denkbar, bei denen an den Fuß 6 eine ebene Abschlußfläche angeformt ist, die unmittelbar auf die Windschutzscheibe aufgeklebt werden kann. Für diesen Fall ist es dann selbstverständlich nicht notwendig, daß die Leiterschichtbahnen 42, 44, 46 an ihren Enden mit Bögen 52, 54, 56 versehen sind.

## Patentansprüche

1. An einer durchsichtigen Scheibe (10) befestigbarer Tragarm (6) eines Spiegels (2), vorzugsweise eines Kfz-Innenspiegels, wobei der Tragarm (6) ein elektrisches Kabel (8) mit wenigstens einer Leiterseele umschließt und einen Fuß (6) zur Verbindung mit der Scheibe (10) aufweist, dadurch gekennzeichnet, daß ein mit der Leiterseele elektrisch verbundener Leiter (41, 43, 45) soweit aus dem Fuß (6) vorsteht, daß sein freies Ende eine auf der Scheibe (10) aufgebrachte Leiterschichtbahn (42, 44, 46) kontaktiert.

2. Spiegel nach Anspruch 1, dadurch gekennzeichnet, daß der Leiter (41, 43, 45) in Richtung auf die Scheibe (10) elastisch beaufschlagt ist.

3. Spiegel nach Anspruch 1 oder 2, dadurch gekennzeichnet, daß der Leiter (41, 43, 45) in einem elektrisch isolierenden Haltestück (21, 23, 25) des Fußes (6) eingebettet ist.

4. Spiegel nach einem oder mehreren der vorstehenden Ansprüche, dadurch gekennzeichnet, daß der Leiter die Form eines Stiftes hat.

5. Spiegel nach einem oder mehreren der vorstehenden Ansprüche, dadurch gekennzeichnet, daß das freie Ende des Leiters (41, 43, 45) ballig ausgeführt ist.

6. Spiegel nach einem oder mehreren der vorstehenden Ansprüche, dadurch gekennzeichnet, daß das freie Ende des Leiters (41, 43, 45) elastisch nachgiebig gelagert ist.

7. Spiegel nach einem oder mehreren der vorstehenden Ansprüche, dadurch gekennzeichnet, daß an der Scheibe (10) eine Grundplatte (12) befestigt ist, in welche der Fuß (6) einrastbar ist, und daß die Leiterschichtbahn (42, 44, 46) außerhalb der Grundplatte (12) enden.

8. Spiegel nach Anspruch 7, dadurch gekennzeichnet, daß der Fuß (6) durch Drehung um einen vorgegebenen Winkel mit der Grundplatte (12) verrastbar ist und daß die Leiterschichtbahn (42, 44, 46) in einem Bogen (52, 54, 56) endet, der zum Mittelpunkt der Drehung konzentrisch ist.

9. Spiegel nach einem oder mehreren der vorstehenden Ansprüche, dadurch gekennzeichnet, daß das Haltestück (21, 23, 25) außen am Fuß (6) angeordnet ist und außerhalb der gegebenenfalls vorgesehenen Grundplatte (12) angeordnet ist.

10. Spiegel nach einem oder mehreren der vorstehenden Ansprüche, dadurch gekennzeichnet, daß der Leiter von einer Schutzhaube (20) überdeckt ist.
